# EUROPEAN PATENT APPLICATION

(11) **EP 4 614 465 A1**
(43) Date of publication of application: **10.09.2025**
(21) Application number: 23890141.7
(22) Date of filing: 12.06.2023
(51) Int. Cl.: G06V 40/13

(54) **ULTRASONIC SENSOR, MANUFACTURING METHOD THEREFOR AND ELECTRONIC DEVICE**

(30) Priority: 14.11.2022 CN 202211426282; 29.12.2022 CN 202211717345
(71) Applicant: Huawei Technologies Co., Ltd., Shenzhen, Guangdong 518129 (CN)
(72) Inventor: ZHANG, Cuiping, Shenzhen, Guangdong 518129 (CN)
(74) Representative: Isarpatent
(86) International application number: PCT/CN2023/099646
(87) International publication number: WO 2024/103699

(57) **Abstract**

Embodiments of this application provide an ultrasonic sensor and a preparation method thereof, and an electronic device, and relate to the field of sensing detection technologies, to improve detection precision and sensitivity of the ultrasonic sensor. The ultrasonic sensor includes an ultrasonic transceiver and a lens stack layer. The ultrasonic transceiver is configured to: transmit an ultrasonic wave to a side on which the lens stack layer is located, and receive an ultrasonic wave reflected back by the lens stack layer. The lens stack layer and the ultrasonic transceiver are disposed in a stacked manner, and the lens stack layer includes a lens layer and an acoustic impedance matching layer that are disposed in a stacked manner. The lens layer includes a plurality of lens units, and the acoustic impedance matching layer covers the plurality of lens units. Acoustic impedance of the lens layer is different from acoustic impedance of the acoustic impedance matching layer. The ultrasonic sensor is used for fingerprint recognition or palmprint recognition.

## Description

This application claims priorities to Chinese Patent Application No. 202211426282.2, filed with the China National Intellectual Property Administration on November 14, 2022 and entitled "FINGERPRINT RECOGNITION MODULE AND PREPARATION METHOD THEREOF, AND ELECTRONIC DEVICE", and to Chinese Patent Application No. 202211717345.X, filed with the China National Intellectual Property Administration on December 29, 2022 and entitled "ULTRASONIC SENSOR AND PREPARATION METHOD THEREOF, AND ELECTRONIC DEVICE", both of which are incorporated herein by reference in their entireties.

### TECHNICAL FIELD

This application relates to the field of sensing detection technologies, and in particular, to an ultrasonic sensor and a preparation method thereof, and an electronic device.

### BACKGROUND

In an ultrasonic sensor, an ultrasonic transceiver may be configured to: send an ultrasonic wave to a to-be-detected object through an ultrasonic transmission medium, and receive an ultrasonic wave reflected back by the to-be-detected object, to complete detection on the to-be-detected object.

For example, in an ultrasonic fingerprint ultrasonic sensor, an ultrasonic wave sent by an ultrasonic transceiver may be sent to a finger, and reflected back to the ultrasonic transceiver at different intensity at a ridge and a valley of a fingerprint. The reflected signal may be processed to generate a fingerprint image, so as to obtain and recognize the fingerprint image.

However, an ultrasonic penetration capability directly affects detection accuracy and sensitivity of the ultrasonic sensor, and affects user experience.

### SUMMARY

Embodiments of this application provide an ultrasonic sensor and a preparation method thereof, and an electronic device, to improve detection precision and sensitivity of the ultrasonic sensor.

To achieve the foregoing objective, this application uses the following technical solutions.

According to a first aspect of embodiments of this application, an ultrasonic sensor is provided, including an ultrasonic transceiver and a lens stack layer. The lens stack layer and the ultrasonic transceiver are disposed in a stacked manner, and the ultrasonic transceiver is configured to: transmit an ultrasonic wave to a side on which the lens stack layer is located, and receive an ultrasonic wave reflected back by the lens stack layer. The lens stack layer includes a lens layer and an acoustic impedance matching layer that are disposed in a stacked manner. The lens layer includes a plurality of lens units, and the acoustic impedance matching layer covers the plurality of lens units. Acoustic impedance of the lens layer is different from acoustic impedance of the acoustic impedance matching layer.

The ultrasonic sensor provided in this embodiment of this application includes the lens stack layer that is disposed in a stacked manner with the ultrasonic transceiver. The lens stack layer includes the lens layer and the acoustic impedance matching layer that are disposed in the stacked manner and whose acoustic impedance is different. A difference between the acoustic impedance of the lens layer and the acoustic impedance of the acoustic impedance matching layer and a proper design of a transparent surface of the lens unit in the lens layer are used, so that an ultrasonic wave (for example, an ultrasonic wave reflected back by a top-layer structure) emitted into the lens stack layer may be focused or a virtual image is formed in the ultrasonic transceiver (for example, at a position of a piezoelectric layer), to improve strength and precision of an ultrasonic signal, so as to improve a penetration capability of the ultrasonic signal, and improve sensitivity and precision of detection on a pressing object.

In a possible implementation, a first surface that is of at least one of the plurality of lens units and that faces the acoustic impedance matching layer is a convex surface. This is an implementation with a simple structure.

In a possible implementation, a first surface that is of at least one of the plurality of lens units and that faces the acoustic impedance matching layer is a concave surface. This is an implementation with a simple structure.

In a possible implementation, the first surface is a curved surface. In this way, a manufacturing process of the lens unit is simple and easy to implement.

In a possible implementation, the first surface is a continuous stepped surface. This is a possible implementation.

In a possible implementation, each of the plurality of lens units faces away from a plane of a second surface of the acoustic impedance matching layer. In this way, a structure of the lens unit is simple, and process difficulty is low.

In a possible implementation, the acoustic impedance matching layer is far away from the ultrasonic transceiver relative to the lens layer. In this way, the acoustic impedance matching layer not only matches the acoustic impedance of the lens layer, but also protects the lens layer.

In a possible implementation, the lens stack layer further includes a lamination layer, and the lamination layer is disposed on a side that is of the lens layer and that is away from the acoustic impedance matching layer. In this way, the lens layer may be attached to another structure (for example, the ultrasonic transceiver) through the lamination layer, to avoid impact on the ultrasonic transceiver or the another structure during preparation of the lens layer.

In a possible implementation, a length and/or a width of a projection of at least one of the plurality of lens units on the ultrasonic transceiver are/is 20 µm to 300 µm. A length and/or a width of the lens unit are/is limited to 20 µm to 300 µm, so that the lens unit can be applied to a consumer electronics field that has a requirement for a small size while meeting a function of a lens.

In a possible implementation, a ratio of the acoustic impedance of the lens layer to the acoustic impedance of the acoustic impedance matching layer is greater than or equal to 0.1 and less than 1. In this case, the lens stack layer uses the focusing principle to converge divergent ultrasonic waves, so as to improve the ultrasonic penetration capability, and improve the detection precision and sensitivity.

In a possible implementation, a ratio of the acoustic impedance of the lens layer to the acoustic impedance of the acoustic impedance matching layer is greater than 1 and less than or equal to 10. In this case, the lens stack layer uses the principle of forming a virtual image to converge divergent ultrasonic waves, so as to improve the ultrasonic penetration capability, and improve the detection precision and sensitivity.

In a possible implementation, a thickness of the lens layer is 0.1 µm to 200 µm. The thickness of the lens layer is limited to 0.1 µm to 200 µm, so that the lens layer can be applied to a consumer electronics field that has a requirement for a small size while meeting a lens function. In addition, an energy loss of the ultrasonic wave inside the lens layer caused by a large thickness of the lens layer can be avoided.

In a possible implementation, a thickness of the acoustic impedance matching layer is 0.1 µm to 200 µm. The thickness of the acoustic impedance matching layer is limited to 0.1 µm to 200 µm, so that a function of the lens stack layer like focusing or forming a virtual image can be implemented without excessively increasing a thickness of the ultrasonic sensor.

In a possible implementation, the ultrasonic transceiver includes a substrate, and a second electrode layer, the piezoelectric layer, and a first electrode layer that are sequentially disposed on the substrate. The second electrode layer includes a plurality of electrode blocks disposed in an array. This is an ultrasonic transceiver with a simple structure.

In a possible implementation, the plurality of electrode blocks are disposed in correspondence with the plurality of lens units.

In a possible implementation, the ultrasonic sensor is used as a fingerprint sensor. This is an application scenario with a high market requirement.

In a possible implementation, the ultrasonic sensor is used as a palmprint sensor. This is an application scenario with a high market requirement.

According to a second aspect of embodiments of this application, an ultrasonic sensor preparation method is provided, including: forming an ultrasonic transceiver; and forming a lens stack layer on a side of the ultrasonic transceiver. The ultrasonic transceiver is configured to: transmit an ultrasonic wave to the side on which the lens stack layer is located, and receive an ultrasonic wave reflected back by the lens stack layer. The lens stack layer includes a lens layer and an acoustic impedance matching layer that are disposed in a stacked manner. The lens layer includes a plurality of lens units, and the acoustic impedance matching layer covers the plurality of lens units. Acoustic impedance of the lens layer is different from acoustic impedance of the acoustic impedance matching layer.

Beneficial effect of the ultrasonic sensor preparation method provided in this embodiment of this application is the same as beneficial effect of the ultrasonic sensor. Details are not described herein again.

In a possible implementation, the forming a lens stack layer on a side of the ultrasonic transceiver includes: forming the lens layer on the side of the ultrasonic transceiver by using a nanoimprint lithography; and forming the acoustic impedance matching layer on a side that is of the lens layer and that is away from the ultrasonic transceiver. The lens layer is formed by using the nanoimprint lithography. A process is simple, costs are low, and the lens layer can be produced on a large scale.

In a possible implementation, the forming a lens stack layer on a side of the ultrasonic transceiver includes: forming the lens layer by using a nanoimprint lithography; and attaching the lens layer to the side of the ultrasonic transceiver by using the acoustic impedance matching layer. The lens layer is formed by using the nanoimprint lithography. A process is simple, costs are low, and the lens layer can be produced on a large scale.

According to a third aspect of embodiments of this application, an electronic device is provided, including an ultrasonic sensor and a printed circuit board. The ultrasonic sensor is coupled to the printed circuit board, and the ultrasonic sensor includes the ultrasonic sensor according to any possible implementation of the first aspect.

In a possible implementation, the electronic device further includes a display, and the display is disposed on a side that is of the lens stack layer and that is away from the ultrasonic transceiver.

In a possible implementation, the electronic device further includes a cover, and the cover is disposed on a side that is of the lens stack layer and that is away from the ultrasonic transceiver.

According to a fourth aspect of embodiments of this application, a fingerprint recognition module is provided, including an ultrasonic fingerprint recognition layer and a lens layer. The lens layer is disposed on a surface of the ultrasonic fingerprint recognition layer, and the lens layer is configured to focus ultrasonic waves.

In a possible implementation, a surface of the lens layer is a curved surface.

In a possible implementation, the lens layer includes a binary acoustic microlens layer.

In a possible implementation, a thickness of the lens layer is between 0.1 µm and 200 µm.

In a possible implementation, a length or a width of the lens layer is between 20 µm and 300 µm.

According to a fifth aspect of embodiments of this application, an electronic device is provided, including a display and the fingerprint recognition module according to any one of the fourth aspect. The display is disposed on a lens layer.

According to a sixth aspect of embodiments of this application, a fingerprint recognition module preparation method is provided, including: providing an ultrasonic fingerprint recognition layer; and forming a lens layer on the ultrasonic fingerprint recognition layer, where the lens layer is configured to focus ultrasonic waves.

In a possible implementation, the lens layer is prepared by using a nanoimprinting process.

### BRIEF DESCRIPTION OF DRAWINGS

FIG. 1 is a diagram of a framework of an electronic device according to an embodiment of this application;
FIG. 2A is an application architecture diagram of an ultrasonic sensor according to an embodiment of this application;
FIG. 2B is an application architecture diagram of another ultrasonic sensor according to an embodiment of this application;
FIG. 3A is a diagram of a structure of an ultrasonic sensor according to an embodiment of this application;
FIG. 3B is a diagram of a structure of another ultrasonic sensor according to an embodiment of this application;
FIG. 4A is a diagram of a structure of still another ultrasonic sensor according to an embodiment of this application;
FIG. 4B is a diagram of a structure of yet another ultrasonic sensor according to an embodiment of this application;
FIG. 5A is a diagram of a structure of still yet another ultrasonic sensor according to an embodiment of this application;
FIG. 5B is a diagram of a structure of a further ultrasonic sensor according to an embodiment of this application;
FIG. 6A is a diagram of a structure of a still further ultrasonic sensor according to an embodiment of this application;
FIG. 6B is a diagram of a structure of a yet further ultrasonic sensor according to an embodiment of this application;
FIG. 7A is a diagram of a structure of a still yet further ultrasonic sensor according to an embodiment of this application;
FIG. 7B is a diagram of a structure of even yet another ultrasonic sensor according to an embodiment of this application;
FIG. 8 is an application architecture diagram of still another ultrasonic sensor according to an embodiment of this application;
FIG. 9 is an application architecture diagram of yet another ultrasonic sensor according to an embodiment of this application;
FIG. 10 is an application architecture diagram of still yet another ultrasonic sensor according to an embodiment of this application; and
FIG. 11 is an application architecture diagram of a further ultrasonic sensor according to an embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application.

Terms such as "second" and "first" below are only for ease of description, and cannot be understood as indicating or implying relative importance or implicitly indicating a quantity of indicated technical features. Therefore, a feature limited by "second", "first", or the like may explicitly or implicitly include one or more features. In the descriptions of this application, unless otherwise stated, "a plurality of" means two or more than two.

In addition, in embodiments of this application, orientation terms such as "upper", "lower", "left", and "right" may include but are not limited to definitions based on illustrated orientations in which components in the accompanying drawings are placed. It should be understood that, these directional terms may be relative concepts. They are used for description and clarification of relative positions, and may vary accordingly depending on a change in the orientations in which the components in the accompanying drawings are placed in the accompanying drawings.

In embodiments of this application, unless otherwise clearly specified and limited, the term "connection" should be understood in a broad sense. For example, the "connection" may be a fixed connection, a detachable connection, or an integrated connection, or may be a direct connection or an indirect connection implemented through an intermediate medium. In addition, the term "coupling" may be a direct electrical connection, or may be an indirect electrical connection through an intermediate medium. The term "contact" may be direct contact or indirect contact through an intermediate medium.

In embodiments of this application, the term "and/or" describes an association relationship between associated objects and may indicate that three relationships exist. For example, A and/or B may indicate the following cases: Only A exists, both A and B exist, and only B exists, where A and B may be singular or plural. The character "/" generally indicates an "or" relationship between the associated objects.

An embodiment of this application provides an electronic device. The electronic device has a sensing detection function for a pressing object. For example, a fingerprint, a palmprint, or a handprint of a hand may be detected. The electronic device is, for example, a consumer electronic product, a home electronic product, or a vehicle-mounted electronic product with a biometric feature detection function. The consumer electronic product is, for example, a mobile phone (mobile phone), a tablet computer (pad), a notebook computer, an e-reader, a personal computer (personal computer, PC), a personal digital assistant (personal digital assistant, PDA), a desktop display, an intelligent wearable product (for example, a smart watch or a smart band), a virtual reality (virtual reality, VR) terminal device, an augmented reality (augmented reality, AR) terminal device, or an uncrewed aerial vehicle. The home electronic product is, for example, a smart door lock, a television, a remote control, a refrigerator, a small household charging appliance (for example, a soy milk maker or a robot vacuum), or the like. The vehicle-mounted electronic product is, for example, a vehicle-mounted navigator or a vehicle-mounted high-density digital video disc (digital video disc, DVD). The electronic device may be an electronic device having a display function, or the electronic device may be an electronic device having no display function. This is not limited in embodiments of this application.

The following uses an example in which the electronic device is a mobile phone for description.

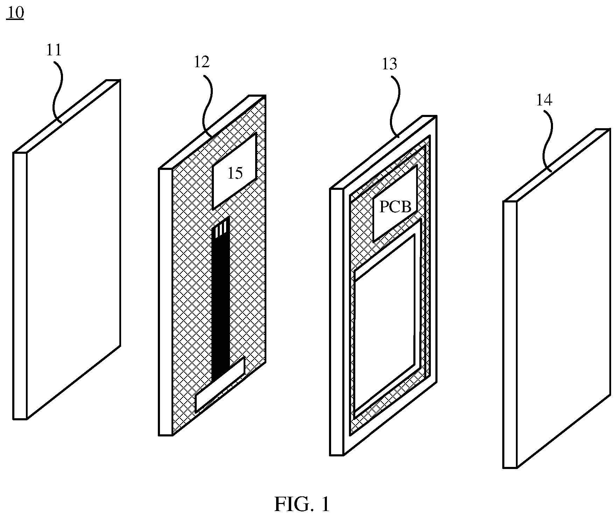

FIG. 1 is a diagram of an electronic device 10 according to an embodiment of this application. As shown in FIG. 1, the electronic device 10 mainly includes a cover 11, a touch display 12, a middle frame 13, and a rear housing 14. The rear housing 14 and the touch display 12 are respectively located on two sides of the middle frame 13, the middle frame 13 and the touch display 12 are disposed in the rear housing 14, the cover 11 is disposed on a side that is of the touch display 12 and that is away from the middle frame 13, and a display surface of the touch display 12 faces the cover 11.

For example, the touch display 12 may be a low temperature poly-silicon (low temperature poly-silicon, LTPS) display, an active-matrix organic light emitting diode (active-matrix organic light emitting diode, AMOLED) display, a low temperature polycrystalline oxide (low temperature polycrystalline oxide, LTPO) display, a liquid crystal display (liquid crystal display, LCD), or a micro organic light emitting diode (micro light emitting diode, micro LED) display. Certainly, a type of the touch display 12 is not limited in this embodiment of this application. All displays having a touch display function are applicable to this embodiment of this application. The foregoing examples are merely examples.

In addition, as shown in FIG. 1, the electronic device 10 further includes a biometric feature recognition sensor 15, and the biometric feature recognition sensor 15 is disposed on a side of the display 12. The biometric feature recognition sensor 15 is configured to provide a biometric feature recognition function for the electronic device 10.

In addition, a person skilled in the art may understand that a structure of the electronic device 10 shown in the foregoing accompanying drawing does not constitute a limitation on the electronic device 10. The electronic device 10 may include more or fewer components than those shown in the figure, or a combination of a part of the components, or an arrangement of different components. For example, the electronic device 10 further includes components such as a printed circuit board (printed circuit board, PCB), a battery, a camera, a microphone, a speaker, a radio frequency circuit, an input unit, a sensor, an audio circuit, a wireless fidelity (wireless fidelity, Wi-Fi) module, a power supply, and a Bluetooth module. Details are not described herein again.

Fingerprint recognition is used as an example. With continuous development of a user's requirement for a bezel-less screen technology, an in-screen fingerprint technology is also continuously developing. Currently, there are two types of in-screen fingerprint technologies: an optical in-screen fingerprint technology and an ultrasonic in-screen fingerprint technology.

Since 2018, the optical in-screen fingerprint technology has been gradually widely applied to an OLED display in-screen fingerprint due to its low costs and excellent performance. However, with continuous development of OLED display technologies, if the biometric feature recognition sensor 15 uses the optical in-screen fingerprint technology, the following problems exist. Performance of an optical in-screen fingerprint module depends on transmittance of the OLED display. Overall transmittance of a common LTPS OLED display in the market is about 3%, and the transmittance is sufficient for application of the optical fingerprint module. However, with continuous penetration of an LTPO OLED display technology in the market and continuous development of emerging OLED screen technologies such as a color on encapsulation (color on encapsulation, COE) structure, transmittance of the OLED display is continuously reduced, and consequently, the optical in-screen fingerprint technology faces a major challenge. In addition, a thickness of a module of a second-generation in-screen optical fingerprint that is currently the most cost-effective is 3 mm to 4 mm, and the thickness is large. As a result, a design of an entire electronic device is limited. In addition, due to the large thickness, the module cannot be used in a foldable screen electronic device. In addition, when the optical in-screen fingerprint technology is used, a display pixel of a fingerprint recognition area needs to be first lighted up. In this case, pixel luminance of the area is high. If finger pressing has a specific deviation, light leakage may occur, and the problem is especially serious in a dark environment.

With development of the optical in-screen fingerprint technology, the ultrasonic in-screen fingerprint technology is also developing and applied to the market. An ultrasonic in-screen fingerprint module is closely attached to the bottom of a display, and receives or sends an ultrasonic wave through a piezoelectric layer, to obtain and recognize a fingerprint image.

In comparison with the optical in-screen fingerprint module, if the biometric feature recognition sensor 15 uses the ultrasonic in-screen fingerprint technology, the ultrasonic in-screen fingerprint module has the following advantages. The ultrasonic in-screen fingerprint technology does not depend on transmittance of a display, and can adapt to a current technology development trend of continuously decreasing transmittance of an OLED display. In addition, the ultrasonic in-screen fingerprint module is thin and is only 200 µm to 300 µm in thickness, which is conducive to an overall structure design of the electronic device, and may also be used in the folded screen electronic device. In addition, the ultrasonic in-screen fingerprint module has a faster identification speed, and there is no problem like light leakage.

In view of this, an embodiment of this application provides an ultrasonic sensor. The ultrasonic sensor uses the ultrasonic in-screen fingerprint technology, and may be used as the biometric feature recognition sensor 15 in the electronic device 10.

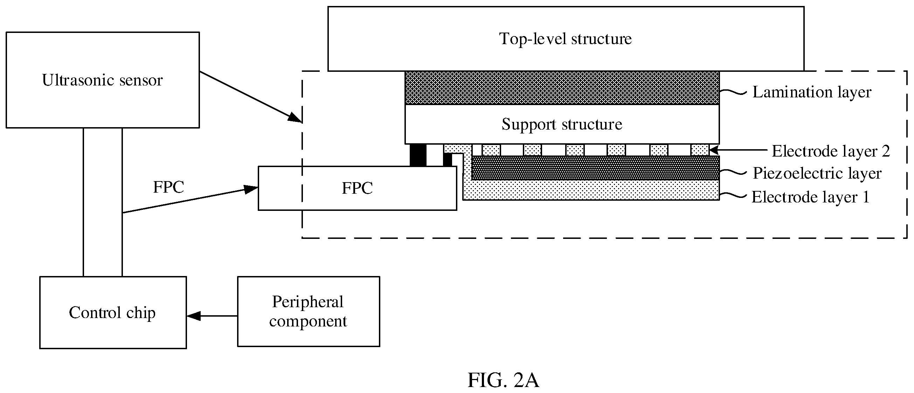

FIG. 2A is a diagram of a structure of an ultrasonic sensor according to an embodiment of this application. As shown in FIG. 2A, an ultrasonic sensor 20 includes an electrode layer 1, a piezoelectric layer, an electrode layer 2, and a support structure.

For example, the electrode layer 1 is formed by coating an entire surface with conductive silver paste, the piezoelectric layer is prepared by using a copolymer (copolymer) organic composite material whose core material is polyvinylidene difluoride (PVDF), the support structure is a glass substrate, and the electrode layer 2 is an electrode array and formed on the glass substrate.

When the ultrasonic sensor is used in an electronic device, as shown in FIG. 2A, the ultrasonic sensor is bonded to a top-layer structure via a lamination layer. The top-layer structure may be a display, a glass cover, a metal cover, or another cover.

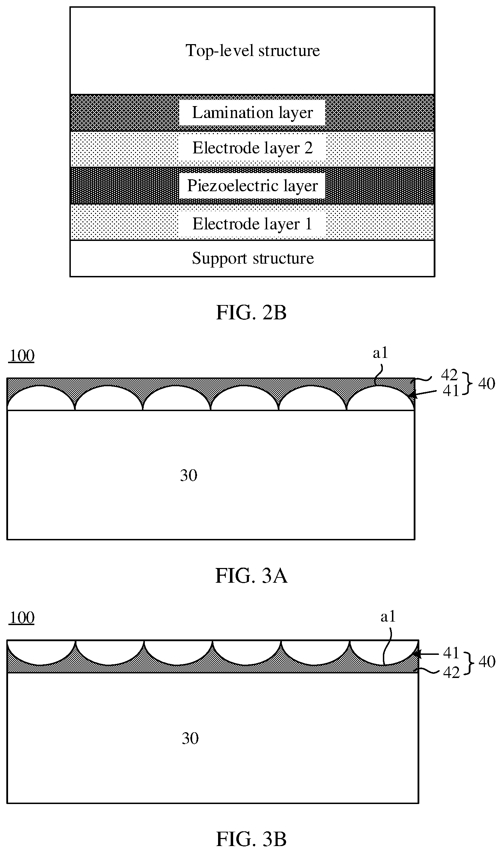

In actual application, as shown in FIG. 2A, a back side of the ultrasonic sensor may be attached to the bottom of the top-layer structure, that is, the support structure is attached to the bottom of the top-layer structure via the lamination layer. As shown in FIG. 2B, a front side of the ultrasonic sensor may be attached to the bottom of the top-layer structure. In other words, compared with the support structure, the piezoelectric layer is closer to the top-layer structure.

An operating process of the ultrasonic sensor is divided into a transmitter (transmitter, TX) phase and a receiver (receiver, RX) phase. In the transmitter phase, a high-voltage pulse signal that is greater than 100 V and whose frequency ranges from 10 MHz to 20 MHz is output to the electrode layer 1 via a control chip and a peripheral component (in this case, the electrode layer 2 has a fixed level). The piezoelectric layer is subject to electrostatic high voltages on both sides, and is converted into high-frequency mechanical vibration, that is, an ultrasonic wave. The ultrasonic wave vibration is transferred to the top-layer structure through each layer until encountering a pressing object (for example, a finger) on the surface of the top-layer structure. Some ultrasonic waves are reflected by the pressing object, and a few ultrasonic waves continue to propagate forward. In the receiver phase, the reflected ultrasonic wave passes through each layer of medium again and reaches the piezoelectric layer. The piezoelectric layer that is nearly stationary is driven by the reflected ultrasonic wave to perform high-frequency vibration, and then the high-frequency vibration is converted into a high-frequency pulse electrical signal. The electrical signal is received by the electrode layer 2 and then transferred to the control chip. Finally, a final ultrasonic-imaged image of the pressing object is obtained by the control chip.

Although the ultrasonic sensor can identify the pressing object, an ultrasonic penetration capability is insufficient. Consequently, the ultrasonic sensor is not applicable to an OLED display with a tempered glass film of a specific thickness. When the ultrasonic sensor is used in an electronic device with the OLED display with the tempered glass film, information about the pressing object cannot be accurately and effectively recognized based on echo signal amplitude. The ultrasonic sensor may alternatively be used under another top-layer structure of glass, metal, or the like, to implement a function of identifying a pressing object. However, the ultrasonic sensor also faces a problem of insufficient penetration capability.

In view of this, an embodiment of this application further provides an ultrasonic sensor, to improve an ultrasonic penetration capability of the ultrasonic sensor by adding a lens layer.

FIG. 3A and FIG. 3B each show an ultrasonic sensor according to an embodiment of this application. As shown in FIG. 3A, an ultrasonic sensor 100 includes an ultrasonic transceiver 30 and a lens stack layer 40, and the ultrasonic transceiver 30 and the lens stack layer 40 are disposed in a stacked manner.

The ultrasonic transceiver 30 is configured to: transmit an ultrasonic wave to a side on which the lens stack layer 40 is located, and receive an ultrasonic wave reflected back by the lens stack layer 40. For example, the ultrasonic transceiver 30 transmits an ultrasonic wave. After passing through the lens stack layer, the ultrasonic wave is reflected to the ultrasonic transceiver 30 by another object and then received by the ultrasonic transceiver 30.

The lens stack layer 40 includes a lens layer 41 and an acoustic impedance matching layer 42 that are disposed in a stacked manner. As shown in FIG. 3A, the lens layer 41 may be disposed close to the ultrasonic transceiver 30. As shown in FIG. 3B, the acoustic impedance matching layer 42 may alternatively be disposed close to the ultrasonic transceiver 30. FIG. 3A is merely an example and does not impose any limitation.

The lens layer 41 includes a plurality of lens units 411, and the acoustic impedance matching layer 42 covers the plurality of lens units 411.

A shape of the lens unit 411 is not limited in embodiments of this application. In some embodiments, the lens unit 411 is a lens having a concave/convex surface feature on both sides.

The following describes a structural feature of a single concave/convex surface of the lens unit 411 by using an example. When both sides of the lens unit 411 have concave/convex surface features, the concave/convex surface of the lens unit 411 may be any concave/convex surface shown in the following.

In some other embodiments, as shown in FIG. 3B, the lens unit 411 is a lens having a concave/convex surface feature on a single side.

For example, as shown in FIG. 3A and FIG. 3B, a first surface a1 that is of at least one lens unit 411 (each lens unit 411 is used as an example in FIG. 3A and FIG. 3B) in the plurality of lens units 411 and that faces the acoustic impedance matching layer 42 is a convex surface that is thicker in the middle and thinner on two sides.

For a track of the convex surface, in some embodiments, as shown in FIG. 3A and FIG. 3B, the first surface a1 is a curved surface.

For example, the first surface a1 is a semicircle.

Alternatively, for example, a shape of the first surface a1 is any shape having a specific radian.

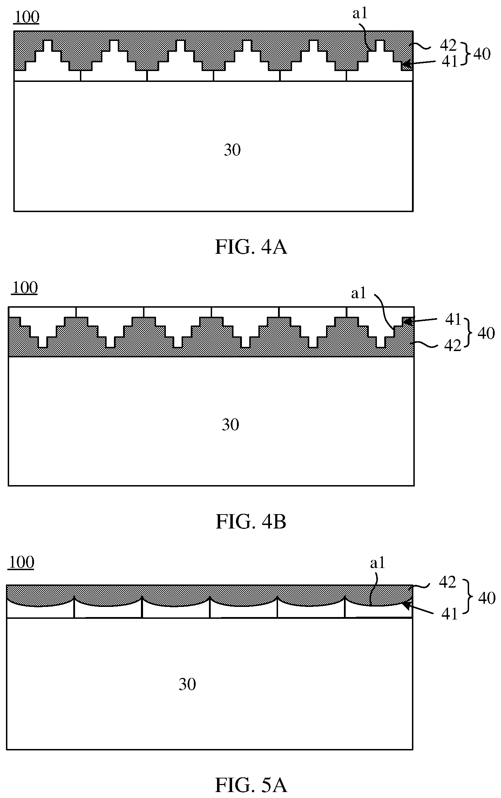

FIG. 4A and FIG. 4B each show an ultrasonic sensor according to an embodiment of this application. In some other embodiments, as shown in FIG. 4A and FIG. 4B, the first surface a1 is a continuous stepped surface.

For example, the first surface a1 is the same as a surface of a binary acoustic lens, and the lens unit 411 may be, for example, a binary acoustic lens.

Certainly, the first surface a1 may be a convex surface that is thicker in the middle and thinner on two sides and that is of any shape. This embodiment of this application is merely an example, and does not impose any limitation.

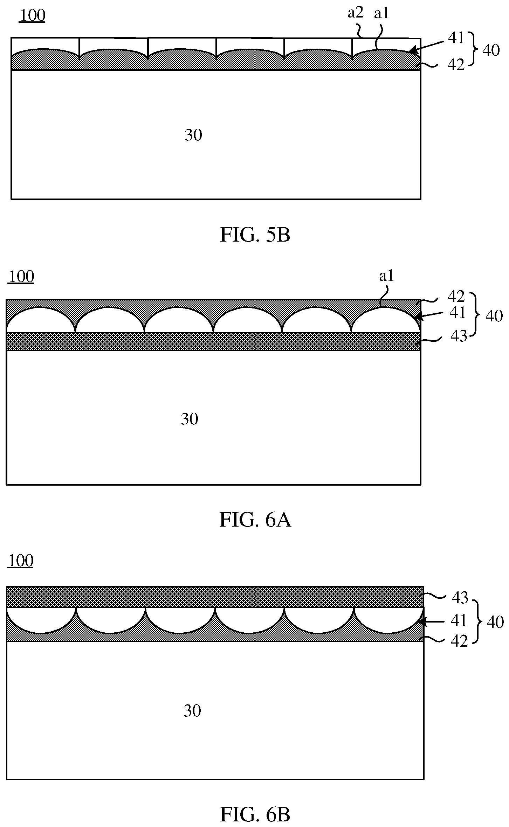

FIG. 5A and FIG. 5B each show an ultrasonic sensor according to an embodiment of this application. Alternatively, for example, as shown in FIG. 5A and FIG. 5B, a first surface a1 that is of at least one lens unit 411 (each lens unit 411 is used as an example in FIG. 5A and FIG. 5B) in the plurality of lens units 411 and that faces the acoustic impedance matching layer 42 is a concave surface that is thicker on two sides and thinner in the middle.

Similarly, the first surface a1 may be a curved surface, the first surface a1 may also be a continuous stepped surface, or the first surface a1 may be a concave surface of another shape.

In some embodiments, as shown in FIG. 5B, each of the plurality of lens units 411 faces away from a plane of a second surface a2 of the acoustic impedance matching layer 42.

In this way, the lens unit 411 has a simple structure and is easy to prepare.

In some embodiments, the lens unit 411 is a mirror symmetric pattern, and a mirror surface of the lens unit 411 is parallel to a thickness direction of the ultrasonic sensor, and passes through a bump or a concave point of the lens unit 411.

In some embodiments, acoustic impedance of the lens layer 41 is different from acoustic impedance of the acoustic impedance matching layer 42.

Acoustic impedance is also referred to as acoustic wave impedance or sound impedance. Acoustic wave conduction is actually propagation of "small disturbances that make a medium deviate from an equilibrium state", and the acoustic wave impedance is resistance that needs to be overcome by displacement of a medium. The acoustic impedance is defined as "a ratio of a speed at which sound pressure flows through an area to a speed at which a medium flows through an area", and can also be expressed as "a product of medium density and a sound speed". When a sound wave passes through a discontinuous interface from one medium to another medium, how much sound energy passes through the interface and how much sound energy is reflected depend on a difference between acoustic impedance of the two media. Larger difference between acoustic impedance indicates stronger reflection.

Therefore, as long as the acoustic impedance of the lens layer 41 is different from the acoustic impedance of the acoustic impedance matching layer 42, the lens stack layer 40 may focus ultrasonic waves or form a virtual image, so as to converge divergent ultrasonic waves, improve ultrasonic energy of a target point (equivalent to improving an ultrasonic penetration capability), and further improve detection precision and sensitivity.

In some embodiments, a material of the lens layer 41 includes an organic material that can be cured or thermally cured through ultraviolet light, and a material of the acoustic impedance matching layer 42 includes a polymer or glass.

In some embodiments, a ratio of the acoustic impedance of the lens layer 41 to the acoustic impedance of the acoustic impedance matching layer 42 is greater than or equal to 0.1 and less than 1.

For example, the ratio of the acoustic impedance of the lens layer 41 to the acoustic impedance of the acoustic impedance matching layer 42 is 0.2, 0.3, 0.4, 0.5, 0.6, 0.7, 0.8, or 0.9.

In this case, the lens stack layer 40 uses the focusing principle to converge divergent ultrasonic waves, improve the ultrasonic penetration capability, and improve the detection precision and sensitivity.

In some other embodiments, a ratio of the acoustic impedance of the lens layer 41 to the acoustic impedance of the acoustic impedance matching layer 42 is greater than 1 and less than or equal to 10.

For example, the ratio of the acoustic impedance of the lens layer 41 to the acoustic impedance of the acoustic impedance matching layer 42 is 2, 3, 4, 5, 6, 7, 8, or 9.

In this case, the lens stack layer 40 uses the principle of forming a virtual image to converge divergent ultrasonic waves, so as to improve the ultrasonic penetration capability, and improve the detection precision and sensitivity.

In some embodiments, a length of a projection of at least one of the plurality of lens units 411 on the ultrasonic transceiver 30 is 20 µm to 300 µm.

For example, the length of the projection of the lens unit 411 on the ultrasonic transceiver 30 is 50 µm, 100 µm, 150 µm, 200 µm, or 250 µm.

In some embodiments, a width of a projection of at least one of the plurality of lens units 411 on the ultrasonic transceiver 30 is 20 µm to 300 µm.

For example, the width of the projection of the lens unit 411 on the ultrasonic transceiver 30 is 50 µm, 100 µm, 150 µm, 200 µm, or 250 µm.

In some embodiments, a thickness of the lens layer 41 is 0.1 µm to 200 µm.

The thickness of the lens layer 41 may be understood as a distance from the second surface a2 of the lens unit 411 to a point that is in the first surface a1 of the lens unit 411 and that is farthest away from the acoustic impedance matching layer 42.

For example, the thickness of the lens layer 41 is 10 µm, 30 µm, 50 µm, 70 µm, 100 µm, 120 µm, 150 µm, 170 µm, or 190 µm.

In some embodiments, a thickness of the acoustic impedance matching layer 42 is 0.1 µm to 200 µm.

The thickness of the acoustic impedance matching layer 42 may be understood as a distance from a bump or a concave point on the first surface a1 of the lens unit 411 to the acoustic impedance matching layer 42.

For example, the thickness of the acoustic impedance matching layer 42 is 10 µm, 30 µm, 50 µm, 70 µm, 100 µm, 120 µm, 150 µm, 170 µm, or 190 µm.

In some embodiments, as shown in FIG. 5A, the acoustic impedance matching layer 42 is far away from the ultrasonic transceiver 30 relative to the lens layer 41.

In this way, the acoustic impedance matching layer42 covers a surface of the lens layer 41, and the acoustic impedance matching layer 42 can protect the lens layer 41. In addition, regardless of whether the lens unit 411 of the lens layer 41 is a concave surface or a convex surface, after the acoustic impedance matching layer 42 covers the lens layer 41, a function of a lamination layer is implemented while a function of acoustic impedance matching is implemented.

The ultrasonic sensor provided in this embodiment of this application includes the lens stack layer 40 that is disposed in a stacked manner with the ultrasonic transceiver 30. The lens stack layer 40 includes the lens layer 41 and the acoustic impedance matching layer 42 that are disposed in the stacked manner and whose acoustic impedance is different. A difference between the acoustic impedance of the lens layer 41 and the acoustic impedance of the acoustic impedance matching layer 42 and a proper design of a transparent surface of the lens unit 411 in the lens layer 41 are used, so that an ultrasonic wave (for example, an ultrasonic wave reflected back by a top-layer structure) emitted into the lens stack layer 40 may be focused or a virtual image is formed in the ultrasonic transceiver 30 (for example, at a position of a piezoelectric layer), to improve strength and precision of an ultrasonic signal, so as to improve a penetration capability of the ultrasonic signal, and improve sensitivity and precision of detection on a pressing object.

FIG. 6A and FIG. 6B each show an ultrasonic sensor according to an embodiment of this application. In some embodiments, as shown in FIG. 6A, the lens stack layer further includes a lamination layer 43, and the lamination layer 43 is disposed on a side that is of the lens layer 41 and that is away from the acoustic impedance matching layer 42.

For example, as shown in FIG. 6A, the lamination layer 43 is disposed on a surface of the ultrasonic transceiver 30.

In this way, the lens layer 41 may be attached to the ultrasonic transceiver 30 via the lamination layer 43, so as to facilitate assembly and reduce impact on the ultrasonic transceiver 30 when the lens layer 41 is directly formed on the ultrasonic transceiver 30.

Alternatively, for example, as shown in FIG. 6B, the lamination layer 43 is disposed on a side that is of the lens layer 41 and that is away from the ultrasonic transceiver 30, and the acoustic impedance matching layer 42 is disposed on a surface of the ultrasonic transceiver 30.

In this way, the ultrasonic sensor 100 can be easily attached to the top-layer structure via the lamination layer 43.

In some embodiments, a thickness of the lamination layer 43 is 0.1 µm to 200 µm.

For example, the thickness of the lamination layer 43 is 10 µm, 30 µm, 50 µm, 70 µm, 100 µm, 120 µm, 150 µm, 170 µm, or 190 µm.

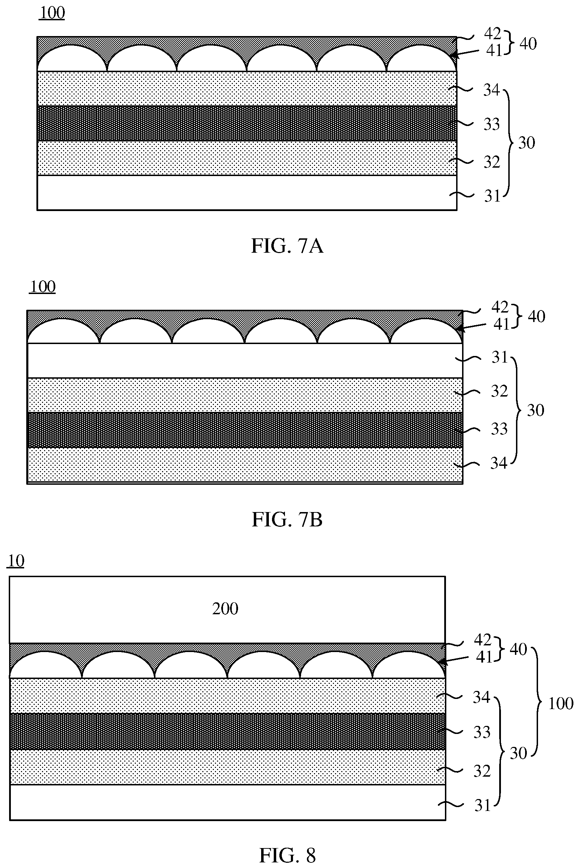

For a structure of the ultrasonic transceiver 30, in some embodiments, as shown in FIG. 7A, the ultrasonic transceiver 30 includes a substrate (or referred to as a bottom-layer structure) 31 and a second electrode layer 32, a piezoelectric layer 33, and a first electrode layer 34 that are sequentially disposed on the substrate 31.

For example, the second electrode layer 32 includes a plurality of electrode blocks disposed in an array. FIG. 7A shows only the second electrode layer 32, but does not show the electrode block. The first electrode layer 34 is a planar electrode.

For example, the substrate 31 may be a glass substrate. The substrate 31 may alternatively be a silicon chip having a circuit structure. A structure of the substrate 31 is not limited in embodiments of this application.

In some embodiments, the plurality of electrode blocks are disposed in correspondence with the plurality of lens units 411.

For example, the plurality of electrode blocks are disposed in a one-to-one correspondence with the plurality of lens units 411.

In some other embodiments, the plurality of electrode blocks correspond to one lens unit 411.

In some other embodiments, one electrode block corresponds to the plurality of lens units 411.

In some embodiments, as shown in FIG. 7A, the first electrode layer 34 in the ultrasonic transceiver 30 is disposed close to the lens stack layer 40 relative to the piezoelectric layer 33.

Alternatively, it is understood that the ultrasonic transceiver 30 is attached to the lens in a front-attaching manner.

In some other embodiments, as shown in FIG. 7B, the substrate 31 in the ultrasonic transceiver 30 is disposed close to the lens stack layer 40 relative to the piezoelectric layer 33.

Alternatively, it is understood that the ultrasonic transceiver 30 is attached to the lens in a reverse-attaching manner.

When the ultrasonic sensor 100 provided in embodiments of this application is used in the electronic device 10 provided in embodiments of this application, for example, the ultrasonic sensor 100 may be coupled to a PCB in the electronic device 10, to implement signal interworking.

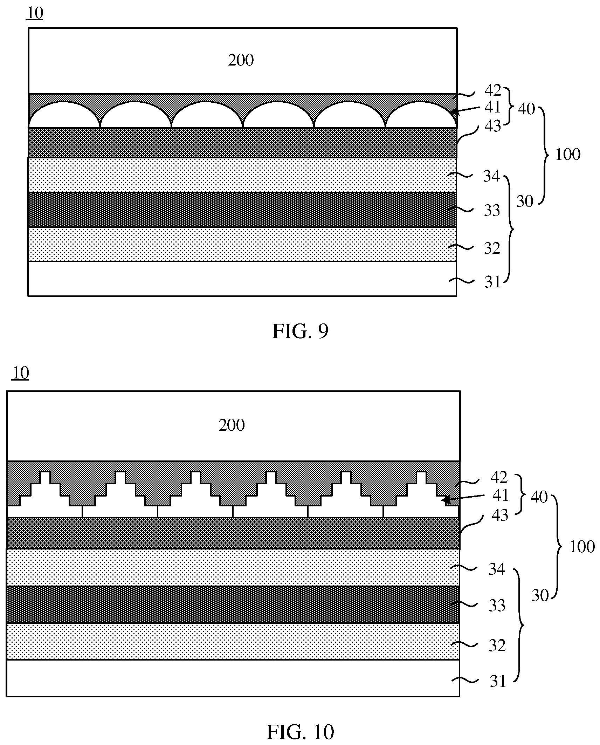

FIG. 8 to FIG. 11 each show a diagram of an architecture of an electronic device 10 according to an embodiment of this application. As shown in FIG. 8, an ultrasonic sensor 100 is further disposed in a stacked manner with a top-layer structure 200 in the electronic device 10.

The top-layer structure 200 is disposed on a side that is of a lens stack layer 40 and that is away from an ultrasonic transceiver 30, and the top-layer structure 200 may be any light-transmitting structure.

Based on different structures of the ultrasonic sensor 100, in some embodiments, as shown in FIG. 8 to FIG. 10, an acoustic impedance matching layer 42 in the ultrasonic sensor 100 may be connected to the top-layer structure 200.

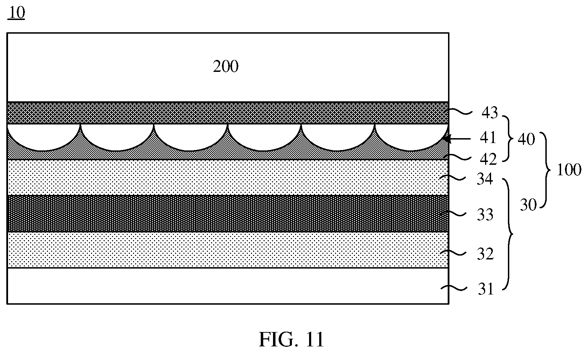

In some other embodiments, as shown in FIG. 11, a lamination layer 43 in the ultrasonic sensor 100 may be connected to the top-layer structure 200.

In some other embodiments, a substrate 31 in the ultrasonic sensor 100 may alternatively be connected to the top-layer structure 200.

In some embodiments, the top-layer structure 200 is a display.

For example, the top-layer structure 200 may be a display like a rigid display, a flexible display, a curved display, a 2.5D display, or a 3D display.

In some other embodiments, the top-layer structure 200 is a cover.

For example, the top-layer structure 200 may be a cover like curved surface cover glass, planar cover glass, or a metal cover.

An embodiment of this application further provides an ultrasonic sensor preparation method, including the following steps.

S10: Form an ultrasonic transceiver 30, where the ultrasonic transceiver 30 is configured to transmit and receive ultrasonic waves.

For a structure of the ultrasonic transceiver 30, refer to related descriptions of the ultrasonic transceiver 30 when the ultrasonic sensor is described above. Details are not described herein again.

For example, step S10 includes the following.

S11: Form a second electrode layer 32 on a substrate 31.

For example, the second electrode layer 32 includes a plurality of electrode blocks disposed in an array, which are similar to pixel electrodes in a display.

S12: Form a piezoelectric layer 33 on a side that is of the second electrode layer 32 and that is away from the substrate 31.

S13: Form a first electrode layer 34 on a side that is of the piezoelectric layer 33 and that is away from the substrate 31.

For example, the first electrode layer 34 is a planar electrode.

S20: Form a lens stack layer 40 on a side of the ultrasonic transceiver 30.

For example, the lens stack layer 40 includes a lens layer 41 and an acoustic impedance matching layer 42 that are disposed in a stacked manner. The lens layer 41 includes a plurality of lens units 411, and the acoustic impedance matching layer 42 covers the plurality of lens units 411. Acoustic impedance of the lens layer 41 is different from acoustic impedance of the acoustic impedance matching layer 42.

For a structure of the lens stack layer 40, refer to related descriptions of the lens stack layer 40 when the ultrasonic sensor is described above. Details are not described herein again.

In some embodiments, step S20 includes the following.

S21: Directly form the lens layer 41 on a side of the ultrasonic transceiver 30 by using a nanoimprint lithography.

For example, the lens layer 41 is directly formed on a surface of the first electrode layer 34. Alternatively, for example, the lens layer 41 is directly formed on a surface of the substrate 31.

S22: Form the acoustic impedance matching layer 42 on a side that is of the lens layer 41 and that is away from the ultrasonic transceiver 30.

When the ultrasonic sensor needs to be combined with a top-layer structure 200, the acoustic impedance matching layer 42 may be directly attached to the top-layer structure 200. Alternatively, the acoustic impedance matching layer 42 may be attached to the top-layer structure 200 by using a separate lamination layer.

In some other embodiments, step S20 includes the following.

S21: Form the lens layer 41 by using the nanoimprint lithography.

For example, a master template of the lens layer 41 is prepared by using a process like laser direct writing or photoetching thermal reflow, and then the lens layer 41 is prepared by using a nanoimprinting process.

S22: The lens layer 41 is attached to one side of the ultrasonic transceiver 30 by using the acoustic impedance matching layer 42.

For example, the lens layer 41 is attached to the surface of the first electrode layer 34 by using the acoustic impedance matching layer 42. Alternatively, for example, the lens layer 41 is attached to the surface of the substrate 31 by using the acoustic impedance matching layer 42.

When the ultrasonic sensor needs to be combined with the top-layer structure 200, the lens layer 41 may be attached to the top-layer structure 200 by using a separate lamination layer.

According to the ultrasonic sensor preparation method provided in this embodiment of this application, the lens layer 41 is formed by using the nanoimprint lithography. A process is simple, costs are low, and the lens layer 41 can be produced on a large scale.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An ultrasonic sensor, comprising:
an ultrasonic transceiver; and
a lens stack layer, wherein the lens stack layer and the ultrasonic transceiver are disposed in a stacked manner, and the ultrasonic transceiver is configured to: transmit an ultrasonic wave to a side on which the lens stack layer is located, and receive an ultrasonic wave reflected back by the lens stack layer; and
the lens stack layer comprises a lens layer and an acoustic impedance matching layer that are disposed in a stacked manner, the lens layer comprises a plurality of lens units, the acoustic impedance matching layer covers the plurality of lens units, and acoustic impedance of the lens layer is different from acoustic impedance of the acoustic impedance matching layer.

2. The ultrasonic sensor according to claim 1, wherein a first surface that is of at least one of the plurality of lens units and that faces the acoustic impedance matching layer is a convex surface or a concave surface.

3. The ultrasonic sensor according to claim 2, wherein the first surface is a curved surface or a continuous stepped surface.

4. The ultrasonic sensor according to any one of claims 1 to 3, wherein each of the plurality of lens units faces away from a plane of a second surface of the acoustic impedance matching layer.

5. The ultrasonic sensor according to any one of claims 1 to 4, wherein the acoustic impedance matching layer is far away from the ultrasonic transceiver relative to the lens layer.

6. The ultrasonic sensor according to any one of claims 1 to 5, wherein the lens stack layer further comprises a lamination layer, and the lamination layer is disposed on a side that is of the lens layer and that is away from the acoustic impedance matching layer.

7. The ultrasonic sensor according to any one of claims 1 to 6, wherein
a length and/or a width of a projection of at least one of the plurality of lens units on the ultrasonic transceiver are/is 20 µm to 300 µm.

8. The ultrasonic sensor according to any one of claims 1 to 7, wherein
a ratio of the acoustic impedance of the lens layer to the acoustic impedance of the acoustic impedance matching layer is greater than or equal to 0.1 and less than 1;
or
a ratio of the acoustic impedance of the lens layer to the acoustic impedance of the acoustic impedance matching layer is greater than 1 and less than or equal to 10.

9. The ultrasonic sensor according to any one of claims 1 to 8, wherein
a thickness of the lens layer is 0.1 µm to 200 µm;
and/or
a thickness of the acoustic impedance matching layer is 0.1 µm to 200 µm.

10. The ultrasonic sensor according to any one of claims 1 to 9, wherein the ultrasonic transceiver comprises a substrate and a second electrode layer, a piezoelectric layer, and a first electrode layer that are sequentially disposed on the substrate, and the second electrode layer comprises a plurality of electrode blocks that are disposed in an array.

11. The ultrasonic sensor according to claim 10, wherein the plurality of electrode blocks are disposed in correspondence with the plurality of lens units.

12. The ultrasonic sensor according to any one of claims 1 to 10, wherein the ultrasonic sensor is used as a fingerprint sensor.

13. An ultrasonic sensor preparation method, comprising:
forming an ultrasonic transceiver; and
forming a lens stack layer on a side of the ultrasonic transceiver, wherein the ultrasonic transceiver is configured to: transmit an ultrasonic wave to a side on which the lens stack layer is located, and receive an ultrasonic wave reflected back by the lens stack layer; and
the lens stack layer comprises a lens layer and an acoustic impedance matching layer that are disposed in a stacked manner, the lens layer comprises a plurality of lens units, the acoustic impedance matching layer covers the plurality of lens units, and acoustic impedance of the lens layer is different from acoustic impedance of the acoustic impedance matching layer.

14. The preparation method according to claim 13, wherein the forming a lens stack layer on a side of the ultrasonic transceiver comprises:
forming the lens layer on the side of the ultrasonic transceiver by using nanoimprint lithography; and
forming the acoustic impedance matching layer on a side that is of the lens layer and that is away from the ultrasonic transceiver.

15. The preparation method according to claim 13, wherein the forming a lens stack layer on a side of the ultrasonic transceiver comprises:
forming the lens layer by using nanoimprint lithography; and
attaching the lens layer to the side of the ultrasonic transceiver by using the acoustic impedance matching layer.

16. An electronic device, comprising an ultrasonic sensor and a printed circuit board, wherein the ultrasonic sensor is coupled to the printed circuit board, and the ultrasonic sensor comprises the ultrasonic sensor according to any one of claims 1 to 12.

17. The electronic device according to claim 16, wherein the electronic device further comprises a display, and the display is disposed on a side that is of a lens stack layer and that is away from an ultrasonic transceiver.

18. The electronic device according to claim 16, wherein the electronic device further comprises a cover, and the cover is disposed on a side that is of a lens stack layer and that is away from an ultrasonic transceiver.
